# EUROPÄISCHE PATENTSCHRIFT

(11) **EP 1 688 320 B1**
(45) Veröffentlichungstag und Bekanntmachung des Hinweises auf die Patenterteilung: **27.02.2008**
(21) Anmeldenummer: 06001832.2
(22) Anmeldetag: 30.01.2006
(51) Int. Cl.: B60R 21/16

(54) **Gassackzuschnitt und Verfahren zur Herstellung eines Gassacks**
Airbag cutting and method for producing an airbag
Decoupe de sac gonflable et procéde de fabrication d'un sac gonflable

(30) Priorität: 04.02.2005 DE 102005005246
(43) Veröffentlichungstag der Anmeldung: 09.08.2006
(73) Patentinhaber: TRW Automotive GmbH, 73553 Alfdorf (DE)
(72) Erfinder: Ritter, Philipp, 73525 Schwäbisch Gmünd (DE)
(74) Vertreter: Sties, Jochen

(56) Entgegenhaltungen:
- EP-A- 0 714 813
- DE-A1- 19 811 200
- US-A- 5 316 337
- US-A- 5 975 571
- PATENT ABSTRACTS OF JAPAN Bd. 1995, Nr. 04, 31. Mai 1995 (1995-05-31) & JP 07 009930 A (TOYO TIRE & RUBBER CO LTD; others: 01), 13. Januar 1995 (1995-01-13)

## Beschreibung

Die Erfindung betrifft einen Gassackzuschnitt sowie ein Verfahren zur Herstellung eines Gassacks.

Das Nähen eines Gassacks ist einer der arbeitsaufwendigsten und damit teuersten Herstellungsschritte bei der Fertigung eines Gassacks. Vor allem bei Gassäcken, die ihre dreidimensionale Gestalt im aufgeblasenen Zustand dadurch erhalten, daß ihre äußere Hülle nicht nur aus zwei flach aufeinandergenähten Bahnen besteht, müssen oft Nähte geschlossen werden, für die sich die Zuschnitteile nicht vollständig flach auf einem Tisch ausbreiten lassen. Diese Art der Verarbeitung ist natürlich umständlich und teuer. Daher ist man bestrebt, Gassackzuschnitte auch für dreidimensionale Gassäcke zu schaffen, bei denen alle Nahtvorgänge bei flach auf einer Unterlage liegenden Zuschnittsteilen mit sogenannten "zweidimensionalen Nähten" erfolgen können.

Ein Gassackzuschitt gemäß dem Oberbegriff des Anspruchs 1 ist aus US 5 316 337 bekannt.

Aufgabe der Erfindung ist es, einen Gassackzuschnitt zu schaffen, bei dem der Gassack mit einem Minimum von Nähvorgängen gefertigt werden kann.

Erfindungsgemäß weist ein zweidimensionaler Gassackzuschnitt einen ersten, einen zweiten und einen dritten Seitenabschnitt auf, wobei der erste Seitenabschnitt mit dem zweiten Seitenabschnitt über eine gemeinsame, eine erste Kantenfaltlinie bildende Seitenkante und der zweite Seitenabschnitt mit dem dritten Seitenabschnitt über eine gemeinsame, eine zweite Kantenfaltlinie bildende Seitenkante verbunden ist. Auf der Fläche jedes Seitenabschnitts verläuft eine Flächenfaltlinie, und die Flächenfaltlinien bilden mit den jeweiligen benachbarten Kantenfaltlinien einen spitzen Winkel. Die Form dieses Gassackzuschnitts erlaubt es, beim Zusammennähen des Gassacks aus dem Zuschnitt mit insgesamt nur drei Nahtvorgängen auszukommen.

Die Faltlinien bezeichnen die Stellen, an denen der Zuschnitt gefaltet wird und unterscheiden sich physikalisch vorzugsweise nicht vom restlichen Bereich des Zuschnitts. Die hier beschriebenen Faltlinien dienen der Faltung des Gassacks beim Zusammennähen und haben nichts mit einer Faltung des fertiggestellten Gassacks zu einem Paket zur Unterbringung in einem Gehäuse zu tun.

Die Ränder der einzelnen Seitenabschnitte, soweit sie nicht über die Seitenkanten bereits mit einem weiteren Abschnitt des Zuschnitts verbunden sind, dienen als Befestigungszone. In diesen Bereichen werden die Nähte zur Fertigung des Gassacks ausgeführt und die Seitenabschnitte aneinander befestigt.

Neben dem Vernähen der Seitenabschnitte des Gassackzuschnitts wären auch andere Arten der Befestigung z.B. durch Kleben, Ultraschallschweißen oder ein anderes geeignetes Verfahren einsetzbar.

Die Flächenfaltlinien teilen jeden der Seitenabschnitte (gedanklich) in jeweils einen unteren und einen oberen Teilabschnitt. Die Begriffe "oben" und "unten" dienen der besseren Erläuterung der Erfindung und sind willkürlich gewählt.

Gemäß einer vorteilhaften Ausführungsform der Erfindung weist ein unterer Teilabschnitt des ersten Seitenabschnitts eine spiegelbildliche Form zu einem unteren Teilabschnitt des zweiten Seitenabschnitts auf, ein oberer Teilabschnitt des zweiten Seitenteils eine spiegelbildliche Form zu einem oberen Teilabschnitt des dritten Seitenabschnitts und ein unterer Teilabschnitt des dritten Seitenabschnitts eine spiegelbildliche Form zu einem oberen Teil des ersten Seitenabschnitts.

Der untere Teilabschnitt des ersten Seitenabschnitts schließt bei dieser Ausführungsform über die erste Kantenfaltlinie an den unteren Teilabschnitt des zweiten Seitenabschnitts an. Der obere Teilabschnitt des zweiten Seitenabschnitts schließt über die zweite Kantenfaltlinie an den oberen Teilabschnitt des dritten Seitenabschnitts an.

Bevorzugt sind der erste und der zweite Seitenabschnitt im wesentlichen identisch geformt. Bevorzugt sind auch der dritte Seitenabschnitt und der erste Seitenabschnitt identisch geformt.

In einer bevorzugten Ausführungsform der Erfindung verlaufen die Flächenfaltlinien über alle Seitenabschnitte betrachtet in einer Zickzacklinie. Hierbei verlaufen benachbarte Flächenfaltlinien jeweils im stumpfen Winkel zueinander.

Gemäß einer bevorzugten Ausführungsform weisen der erste und der zweite Seitenabschnitt und der dritten Seitenabschnitt eine im wesentlichen hexagonale Form auf. Hierdurch ergibt sich ein sehr gutes Verhältnis von Oberfläche zu Volumen für den Gassack.

Die Erfindung betrifft außerdem ein Verfahren zur Herstellung eines Gassacks für ein Fahrzeuginsassen-Rückhaltesystem, mit den folgenden Schritten:
a) ein zweidimensional ausbreitbarer Gassackzuschnitt, so wie oben beschrieben, wird bereitgestellt,
b) der erste Seitenabschnitt wird an der ersten Faltlinie gefaltet und flach auf den zweiten Seitenabschnitt gelegt,
c) untere Teilabschnitte des ersten und zweiten Seitenabschnitts werden zumindest abschnittsweise miteinander verbunden,
d) ein oberer Teilabschnitt des ersten Seitenabschnitts wird entlang der Flächenfaltlinie des ersten Seitenabschnitts zurückgeschlagen,
e) der dritte Seitenabschnitt wird an der zweiten Kantenfaltlinie gefaltet und flach auf den zweiten Seitenabschnitt gelegt,
f) ein oberer Teilabschnitt des dritten Seitenabschnitts und ein oberer Teilabschnitt des zweiten Seitenabschnitts werden miteinander verbunden,
g) die Teilabschnitte werden so umgeschlagen, daß auf einer Seite der Flächenfaltlinie der obere Teilabschnitt des ersten Seitenabschnitts und der untere Teilabschnitt des dritten Seitenabschnitts liegen und alle anderen Teilabschnitte auf der anderen Seite liegen und
h) der unterer Teilabschnitt des dritten Seitenabschnitts wird mit dem oberen Teilabschnitt des ersten Seitenabschnitts verbunden.

In Schritt e) liegt zwischen dem dritten Seitenabschnitt und dem zweiten Seitenabschnitt der zurückgeschlagene Teilabschnitt des ersten Seitenabschnitts.

In Schritt g) kommt es darauf an, den oberen Teilabschnitt des ersten Seitenteils und den unteren Teilabschnitt des dritten Seitenabschnitts ohne störende weitere Abschnitte des Gassacks flach aufeinanderliegen zu haben. Welche der jeweiligen anderen, bereits übereinanderliegenden Teilabschnitte des Gassacks hierfür zur Seite geklappt werden, ist ohne Bedeutung.

Für alle Verbindungen können die jeweils zu verbindenden Abschnitte und Teilabschnitte des Gassackzuschnitts vollständig flach ausgebreitet werden.

Gemäß einer bevorzugten Ausführungsform wird in einem Teilbereich der Verbindung zwischen den unteren Teilabschnitten des ersten und zweiten Seitenabschnitts eine Aufnahmeöffnung für einen Gasgenerator oder eine Einströmöffnung für Druckgas ausgebildet. In einer anderen bevorzugten Ausführungsform ist vorgesehen, daß im unteren Teil des zweiten Seitenabschnitts eine Aufnahmeöffnung für einen Gasgenerator oder eine Einströmöffnung für Druckgas ausgebildet wird. Diese Aufnahmeöffnungen oder Einströmöffnungen können natürlich auch an anderer geeigneter Stelle vorgesehen werden.

Es ist möglich, wenigstens eine Entlüftungsöffnung auszubilden, wobei Abschnitte der Entlüftungsöffnung jeweils an einem und/oder beiden Enden der Flächenfaltlinien vorgesehen sein können. Da die Entlüftungsöffnungen bereits im Zuschnitt vorhanden sind, ist keine nachträgliche Bearbeitung des fertigen Gassacks erforderlich.

In einer weiteren bevorzugten Ausführungsform der Erfindung wird vor Schritt a) der Gassackzuschnitt aus zwei einzelnen Materialstücken zusammengesetzt. Die beiden Materialstücke können eine identische Außenkontur aufweisen. Bevorzugt entspricht die Form eines der Materialstücke der Form des dritten Seitenabschnitts bzw. des ersten Seitenabschnitts mit dem daran angesetzten unteren bzw. oberen Teil des zweiten Seitenabschnitts. Diese Variante ermöglicht es, bei Beibehaltung der Vorteile sowohl des erfindungsgemäßen Zuschnitts als auch des erfindungsgemäßen Verfahrens die Gewebebahnen für den Zuschnitt optimaler auszunutzen und somit den Materialverschnitt zu reduzieren.

Die Erfindung wird nachfolgend detailliert anhand zweier Ausführungsbeispiele und den beigefügten Zeichnungen beschrieben. In den Zeichnungen zeigen:
- Figur 1 einen Gassackzuschnitt gemäß einer ersten Ausführungsform der Erfindung, flach ausgebreitet;
- Figur 2 schematisch die Anordnung mehrerer erfindungsgemäßer Gassackzuschnitte auf einer Gewebebahn;
- Figuren 3 bis 6 ein erfindungsgemäßes Herstellungsverfahren für einen Gassack gemäß einer ersten Variante unter Verwendung des Zuschnitts aus Figur 1;
- Figur 7 schematisch auf einer Gewebebahn angeordnet gezeigte Zuschnittsteile für einen Gassackzuschnitt gemäß einer zweiten Ausführungsform der Erfindung;
- Figur 8 einen erfindungsgemäßen Gassackzuschnitt gemäß einer zweiten Ausführungsform;
- Figuren 9 bis 11 ein zweites erfindungsgemäßes Verfahren zur Fertigung eines Gassacks unter Verwendung eines Zuschnitts nach Figur 8.

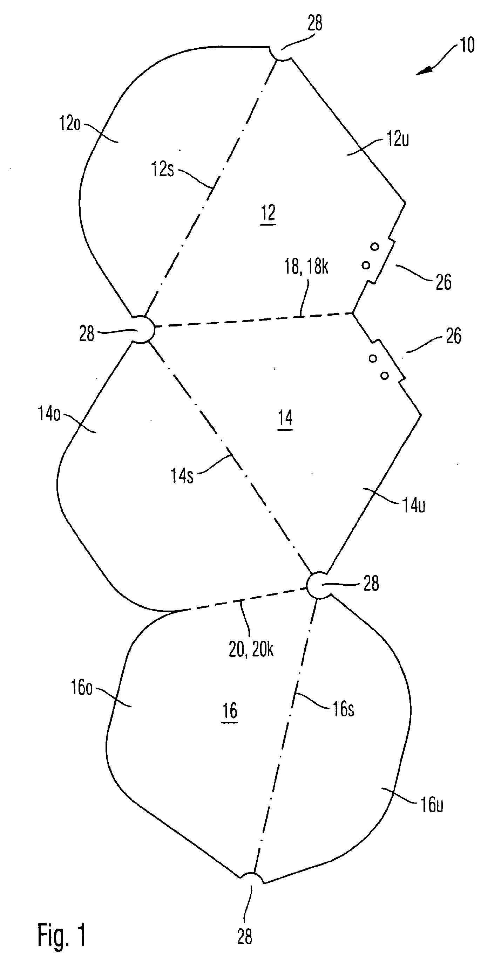

In den Figuren 1 bis 6 sind ein Gassackzuschnitt sowie ein Herstellungsverfahren für einen Gassack gemäß einer ersten Ausführungsform der Erfindung gezeigt.

Der in Figur 1 flach ausgebreitet dargestellte zweidimensionale Gassackzuschnitt 10 ist in drei Teile untergliederbar. An einen ersten Seitenabschnitt 12 (in Fig. 1 ganz oben) schließt sich ein zweiter Seitenabschnitt 14 und an diesen ein dritter Seitenabschnitt 16 an. Der dritte Seitenabschnitt 16 bildet später im aufgeblasenen Gassack eine Prallfläche für einen Fahrzeuginsassen. Der erste Seitenabschnitt 12 ist mit dem zweiten Seitenabschnitt 14 entlang einer gemeinsamen Seitenkante 18 verbunden, die eine erste Kantenfaltlinie 18k bildet. Den Übergang des zweiten Seitenabschnitts 14 zum dritten Seitenabschnitt 16 bildet ebenfalls eine gemeinsame Seitenkante 20, die eine zweite Kantenfaltlinie 20k bildet.

Alle drei Seitenabschnitte 12, 14, 16 haben eine annähernd hexagonale Form. Jeder der drei Seitenabschnitte 12, 14, 16 ist durch eine (gedankliche) Flächenfaltlinie 12s, 14s, 16s unterteilt. Die Flächenfaltlinien verlaufen jeweils zwischen gegenüberliegenden Ecken der Sechsecke.

Die Flächenfaltlinien 12s, 14s, 16s teilen die Seitenabschnitte 12, 14, 16 jeweils in einen unteren und einen oberen Teilabschnitt (wobei die Begriffe "oben" und "unten" willkürlich gewählt sind). Der untere Teilabschnitt 12u des ersten Seitenabschnitts 12 und der untere Teilabschnitt 14u des zweiten Seitenabschnitts 14 weisen eine spiegelbildliche Form auf. Wenn diese Teilabschnitte 12u, 14u aufeinandergeklappt werden, liegen ihre Ränder exakt aufeinander. Dasselbe Verhältnis weisen der obere Teilabschnitt 14o des zweiten Seitenabschnitts 14 und der obere Teilabschnitt 16o des dritten Seitenabschnitts 16 sowie der untere Teilabschnitt 16u des dritten Seitenabschnitts 16 und der obere Teilabschnitt 12o des ersten Seitenabschnitts 12 auf. Die Ecken der Teilabschnitte 12o, 14o, 16u, 16o sind abgerundet. Die Teilabschnitte 12o, 16u haben senkrecht zur jeweiligen Flächenfaltlinie 12s, 16s eine geringere Ausdehnung als die jeweiligen Teilabschnitte 12u und 16o.

Die Flächenfaltlinien 12s, 14s, 16s stoßen jeweils in einem spitzen Winkel von etwa 60° auf die benachbarten Kantenfaltlinien 18k, 20k. Die exakte Größe des Winkels ergibt sich aus der genauen Form der Seitenabschnitte 12, 14, 16; sie liegt bevorzugt zwischen 55° und 75°.

Entlang der Kanten- und Flächenfaltlinien 18k, 20k, 12s, 14s, 16s wird der Gassackzuschnitt 10 in dem im folgenden beschriebenen Herstellungsverfahren des Gassacks gefaltet, um Randzonen der einzelnen Abschnitte 12, 14, 16 miteinander zu verbinden, so daß ein dreidimensionaler Gassack entsteht.

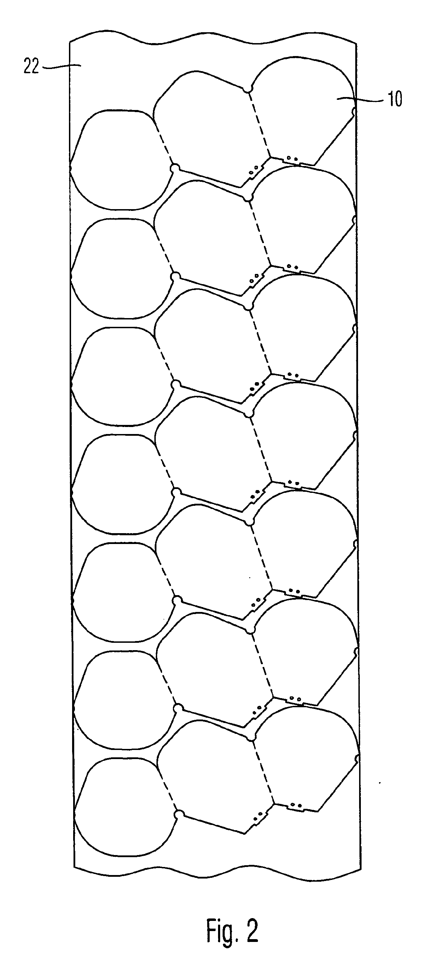

Wie Figur 2 zeigt, erlaubt diese Form des Zuschnitts 10 eine sehr gute Ausnutzung einer Gewebebahn 22, aus der die Zuschnitte 10 ausgeschnitten werden.

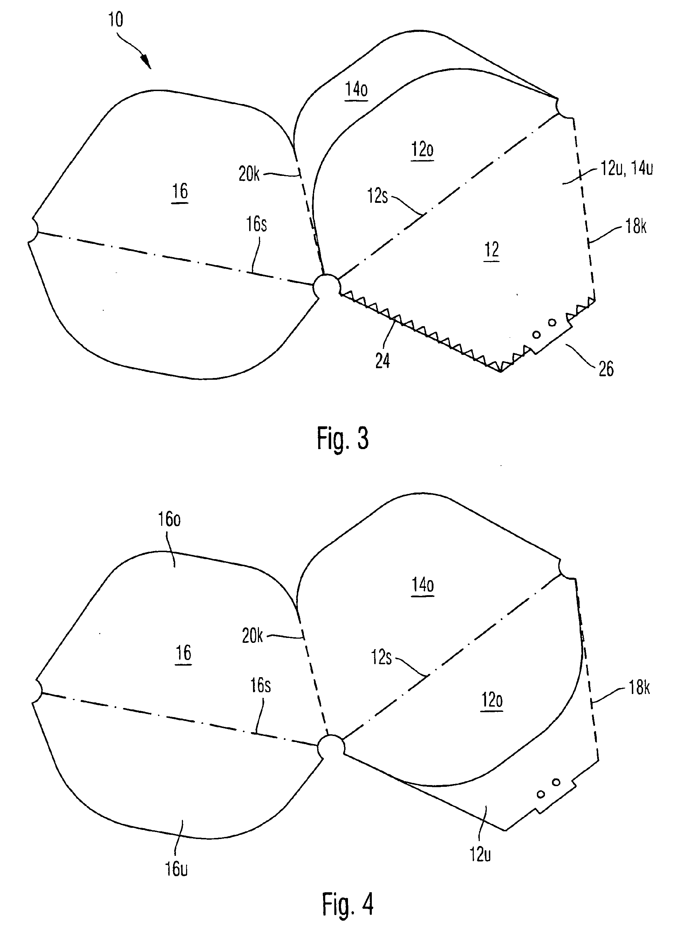

In den Figuren 3 bis 6 ist das Herstellungsverfahren eines Gassacks aus dem Zuschnitt 10 dargestellt. In einem ersten Schritt wird der erste Seitenabschnitt 12 entlang der Kantenfaltlinie 18k umgeschlagen und auf den zweiten Seitenabschnitt 14 gelegt. Der erste Seitenabschnitt 12 ist in Figur 3 von seiner Rückseite gezeigt. Jetzt liegen die unteren Teilabschnitte 12u und 14u des ersten und des zweiten Seitenabschnitts 12, 14 exakt übereinander. Entlang der freien Seitenränder werden jetzt die beiden Teilabschnitte 12u, 14u miteinander mittels einer oder mehrerer Nähte 24 in einem ersten Nähschritt verbunden. Am von der Flächenfaltlinie 12s, 14s abgewandten Ende bleibt in der Naht 24 in den Teilabschnitten 12u, 14u eine Aufnahmeöffnung 26, über die später ein Gasgenerator (nicht gezeigt) mit dem Gassack verbunden werden kann bzw. Druckgas in den Gassack eingeleitet werden kann. Hierzu muß die Naht 24 nur unterbrochen, aber für den Rest des Nähschritts der Zuschnitt nicht neu positioniert werden.

In einem nächsten Schritt wird nun der obere Teilabschnitt 12o des ersten Seitenabschnitts 12 entlang der Flächenfaltlinie 12s umgeklappt. Diesen Zustand zeigt Figur 4.

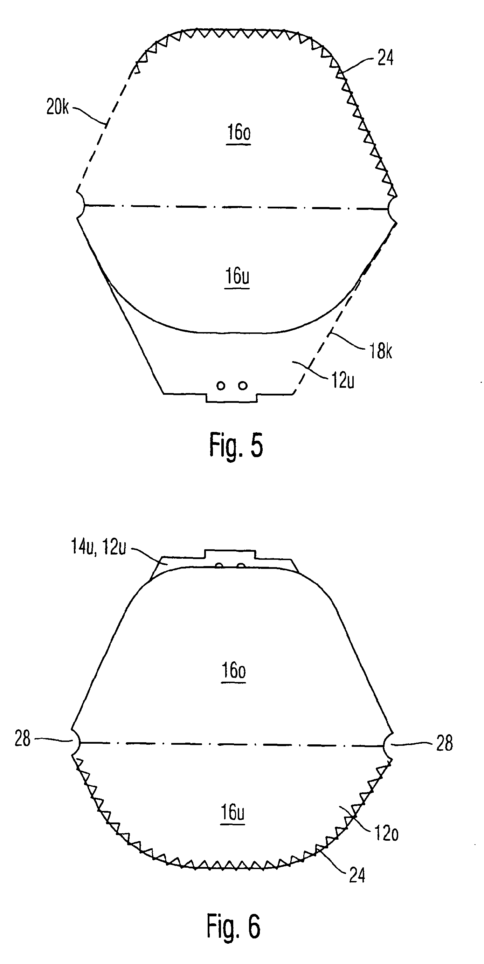

Anschließend wird der dritte Seitenabschnitt 16 entlang der Kantenfaltlinie 20k auf die beiden bereits übereinanderliegenden Seitenabschnitte 12, 14 geklappt, wie dies in Figur 5 zu sehen ist. Die freien Ränder der nun übereinanderliegenden oberen Teilabschnitte 16o und 14o des zweiten und dritten Seitenabschnitts 14, 16 werden vernäht, wie dies schematisch mit der Naht 24 dargestellt ist.

Im letzten Schritt werden die bereits miteinander verbundenen Teilabschnitte 12u, 14u in Richtung des oberen Teilabschnitts 16o des dritten Seitenteils 16 umgeklappt, so daß die letzten beiden noch nicht miteinander verbundenen Teilabschnitte 16u des dritten Seitenabschnitts 16 und 12o des ersten Seitenabschnitts 12 als einzige Gewebelagen übereinanderliegen. Deren freie Randzonen werden nun in einem letzten Nähschritt mit einer Naht 24 verbunden. Insgesamt sind also nur drei separate Nähschritte zur Fertigung des Gassacks erforderlich.

An den Enden der Flächenfaltlinien 12s, 14s, 16s sind jeweils kreisbogenförmige Teilausschnitte 28 vorgesehen, die im fertiggestellten Gassack Entlüftungsöffnungen bilden. Wie Figur 6 zu entnehmen ist, liegen im fertigen, aufgeblasenen Gassack die Entlüftungsöffnungen seitlich der Aufprallfläche für den Fahrzeuginsassen.

Für das erfindungsgemäße Verfahren ist es unwesentlich, ob wie gerade beschrieben zuerst der erste Seitenabschnitt 12 oder der dritte Seitenabschnitt 16 auf den zweiten Seitenabschnitt 14 geklappt werden. Lediglich die jeweiligen Schritte müssen in einer anderen Reihenfolge ausgeführt werden. Genauso gut funktioniert das Verfahren natürlich mit einem zu dem gezeigten Zuschnitt 10 spiegelbildlichen Zuschnitt.

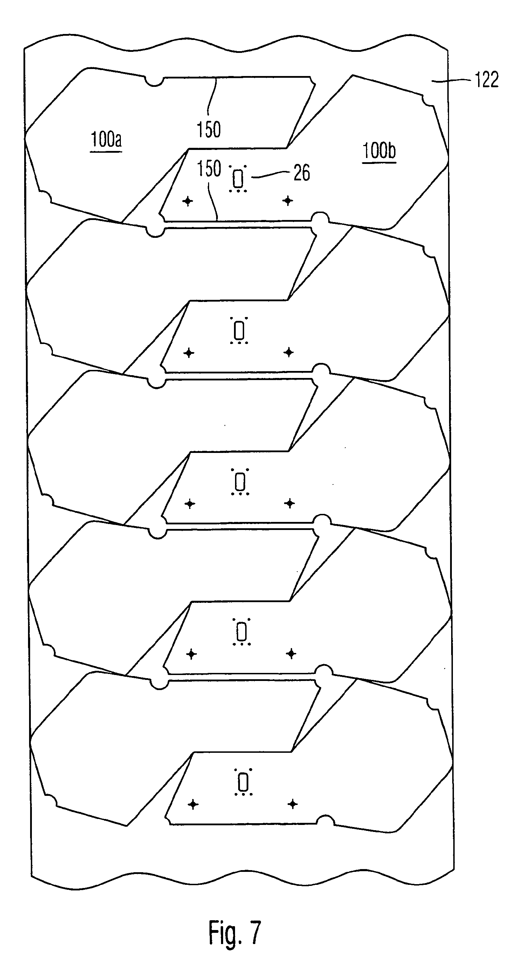

Die Figuren 7 bis 11 zeigen einen weiteren erfindungsgemäßen Gassackzuschnitt 100 sowie ein Verfahren zur Herstellung eines Gassackes daraus.

In Figur 7 ist eine Gewebebahn 122 dargestellt, aus der die Zuschnitte 100 gewonnen werden. Der Zuschnitt 100 ist auf der Gewebebahn 122 in zwei einzelnen Materialstücken 100a, 100b angeordnet. Diese Materialstücke 100a, 100b sind von ihrer Außenkontur her identisch. Das Materialstück 100b weist im Gegensatz zum Materialstück 100a jedoch noch Befestigungsöffnungen sowie eine Aufnahmeöffnung 26 für einen Gasgenerator oder zum Einströmen von Druckgas auf. Mit dieser Form des Zuschnitts wird ein minimaler Verschnitt erreicht.

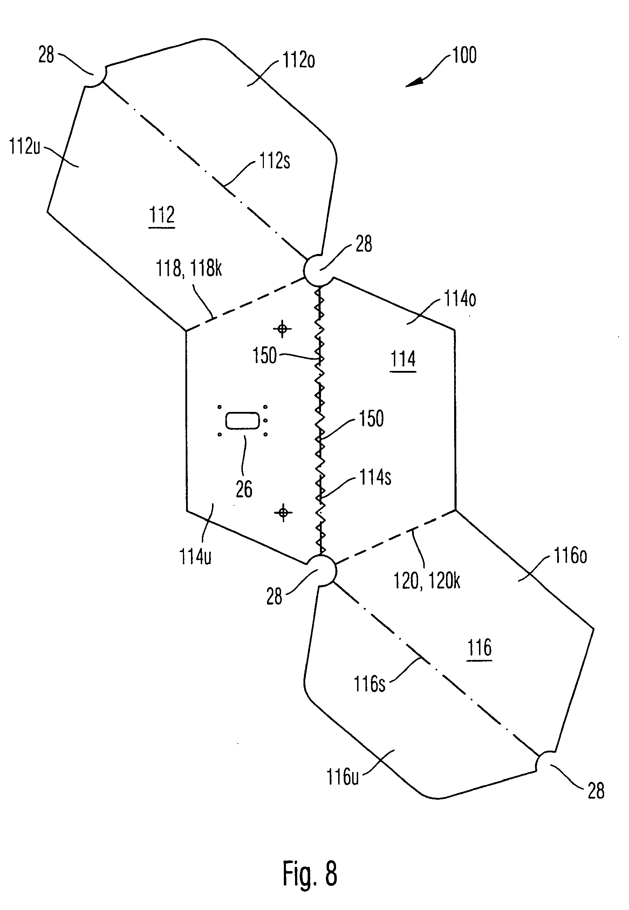

Die beiden einzelnen Materialstücke 100a, 100b des Gassackzuschnitts 100 werden entlang der in den Figuren 7 und 8 gezeigten Linien 150 miteinander vernäht. Daraus resultiert der zweidimensionale Zuschnitt 100, der in Figur 8 gezeigt ist.

Sowohl die Form des Zuschnitts 100 als auch das Herstellungsverfahren des Gassacks sind im wesentlichen analog zu den in der ersten Ausführungsform beschriebenen. Im Unterschied dazu ist jedoch der zweite Seitenabschnitt 114 in Form eines bezüglich der Linie 150 symmetrischen Sechsecks gestaltet. In einer Richtung (in Fig. 8 nach oben) schließt sich über die gemeinsame Kantenfaltlinie 118k an den zweiten Seitenabschnitt 114 der erste Seitenabschnitt 112 an, an der bezüglich des Mittelpunkts des Sechsecks direkt gegenüberliegenden Seitenkante 120 in der anderen Richtung (in Fig. 8 nach unten) über die gemeinsame Kantenfaltlinie 120k der dritte Seitenabschnitt 116.

Auch hier verläuft über jede Fläche eines der Seitenabschnitte 112, 114, 116 eine Flächenfaltlinie 112s, 114s, 116s, wobei die Flächenfaltlinie 114s mit der Verbindungslinie 150 zusammenfällt. Die Flächenfaltlinien 112s, 114s, 116s bilden mit den jeweiligen benachbarten Kantenfaltlinien 118k, 120k einen spitzen Winkel.

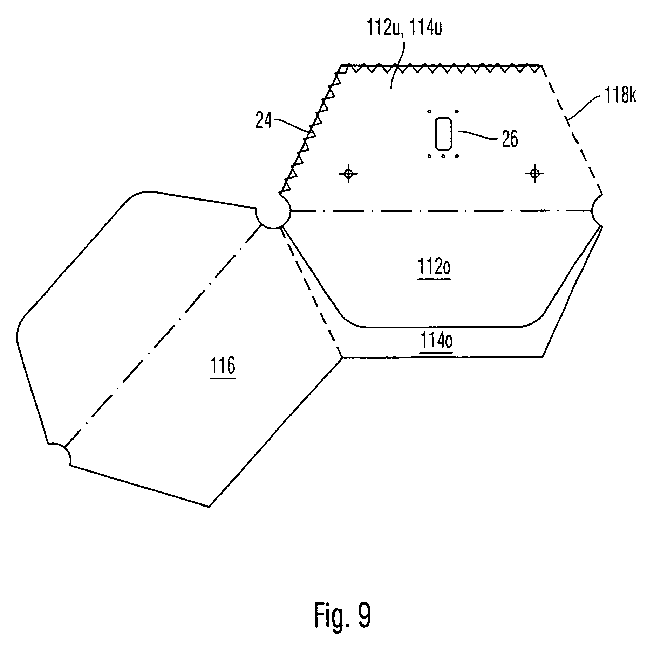

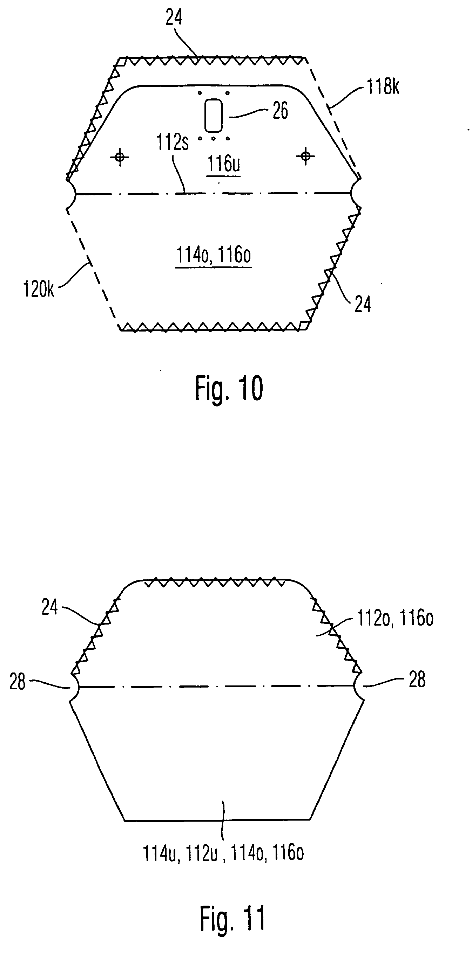

Figur 9 zeigt den ersten Schritt der Herstellung des Gassacks nach dem Zusammenfügen der beiden Zuschnittsteile 100a, 100b. Der erste Seitenabschnitt 112 wurde auf den zweiten Seitenabschnitt 114 geklappt. In Figur 9 sieht man zur Orientierung noch die Aufnahmeöffnung 26, die in Wirklichkeit durch den über dem Teilabschnitt 114u liegenden Teilabschnitt 112u verdeckt ist. Die freien Ränder der Teilabschnitte 112u und 114u werden durch eine Naht 24 verbunden. Anschließend (s. Fig. 10) wird der Teilabschnitt 112o in Figur 10 nach oben geklappt, so daß er auf dem Teilabschnitt 112u zu liegen kommt. Dann wird der dritte Seitenabschnitt 116 entlang der Kantenfaltlinie 120k auf den zweiten Seitenabschnitt 114 und den ersten Seitenabschnitt 112 geklappt. Unter dem Teilabschnitt 116o liegt nun der Teilabschnitt 114o. Wieder sind zur Orientierung die Aufnahmeöffnung 26 und die Befestigungslöcher gezeigt, die eigentlich durch darüberliegende Lagen verdeckt sind. Die freien Ränder der Teilabschnitte 114o und 116o werden mit einer Naht 24 verbunden.

Jetzt werden die bereits miteinander verbundenen Teilabschnitte 114u, 112u in Figur 11 entlang der nun parallel übereinanderliegenden Flächenfaltlinien 112s, 114s, 116s nach unten geklappt, wobei im unteren Abschnitt von Figur 11 nun die Teilabschnitte 114u, 112u, 114o, 116o übereinanderliegen. Im oberen Teil der Figur 11 liegen die beiden Teilabschnitte 112o und 116u übereinander. Diese werden nun an ihren freien Rändern mit einer Naht 24 verbunden.

Wie im vorhergehenden Beispiel weist auch der Gassack-Zuschnitt 100 an den Enden der Flächenfaltlinien 112s, 114s, 116s Teilausschnitte 28 auf, die im fertigen Gassack Ausströmöffnungen bilden.

Der Zuschnitt 100 könnte auch einteilig hergestellt sein. Ebenso könnte natürlich auch ein spiegelbildlicher Zuschnitt verwendet werden. Die Anordnungen der Aufnahmeöffnung 26 können zwischen den Ausführungsformen beliebig getauscht werden, es sind auch andere bekannte Anordnungen zum Einbringen von Füllgas in den Gassack möglich. Der in der ersten Ausführungsform beschriebene Zuschnitt 10 könnte auch zwei- oder mehrteilig auf der Gewebebahn 22 angeordnet sein und erst zu einem einteiligen, zweidimensionalen Gassackzuschnitt zusammengesetzt werden.

## Patentansprüche

1. Zweidimensionaler Gassackzuschnitt (10; 100) mit einem ersten, einem zweiten und einem dritten Seitenabschnitt (12, 14, 16; 112, 114; 116),
wobei der erste Seitenabschnitt (12;112) mit dem zweiten Seitenabschnitt (14; 114) über eine gemeinsame, eine erste Kantenfaltlinie (18k; 118k) bildende Seitenkante (18; 118) und der zweite Seitenabschnitt (14; 114) mit dem dritten Seitenabschnitt (16; 116) über eine gemeinsame, eine zweite Kantenfaltlinie (20k; 120k) bildende Seitenkante (20: 120) verbunden ist,
und auf der Fläche jedes Abschnitts (12, 14, 16; 112, 114, 116) eine Flächenfaltlinie (12s, 14s, 16s; 112s, 14s, 116s) verläuft, **dadurch**
**gekennzeichnet daß** die Flächenfaltlinien (12s, 14s, 16s; 112s, 114s, 116s) mit den jeweiligen benachbarten Kantenfaltlinien (18k, 20k; 118k, 120k) einen spitzen Winkel bilden.

2. Gassackzuschnitt nach einem der vorhergehenden Ansprüche, **dadurch gekennzeichnet, daß** der spitze Winkel zwischen 55° und 75° liegt.

3. Gassackzuschnitt nach einem der vorhergehenden Ansprüche, **dadurch gekennzeichnet, daß** ein unterer Teilabschnitt (12u; 112u) des ersten Seitenabschnitts (12, 112) eine spiegelbildliche Form zu einem unteren Teilabschnitt (14u; 114u) des zweiten Seitenabschnitts (14; 114) aufweist,
ein oberer Teilabschnitt (14o; 114o) des zweiten Seitenabschnitts (14; 114) eine spiegelbildliche Form zu einem oberen Teilabschnitt (16o; 116o) des dritten Seitenabschnitts (16; 116) und
ein unterer Teilabschnitt (16u; 116u) des dritten Seitenabschnitts (16; 116) eine spiegelbildliche Form zu einem oberen Teilabschnitt (12o; 112o) des ersten Seitenabschnitts (12; 112).

4. Gassackzuschnitt nach Anspruch 3, **dadurch gekennzeichnet daß** der untere Teilabschnitt (12u; 112u) des ersten Seitenabschnitts (12; 112) über die erste Kantenfaltlinie (18k; 118k) an den unteren Teilabschnitt (14u; 114u) des zweiten Seitenabschnitts (14; 114) anschließt.

5. Gassackzuschnitt nach einem der vorhergehenden Ansprüche, **dadurch gekennzeichnet, daß** der erste und der zweite Seitenabschnitt (12, 14) im wesentlichen identisch geformt sind.

6. Gassackzuschnitt nach einem der vorhergehenden Ansprüche, **dadurch gekennzeichnet, daß** der dritte Seitenabschnitt (116) und der erste Seitenabschnitt (112) im wesentlichen identisch geformt sind.

7. Gassackzuschnitt nach einem der Ansprüche 3 bis 6, **dadurch gekennzeichnet, daß** der obere Teilabschnitt (14o; 114o) des zweiten Seitenabschnitts (14; 114) über die zweite Kantenfaltlinie (20k; 120k) an den oberen Teilabschnitt (16o; 116o) des dritten Seitenabschnitts (16; 116) anschließt.

8. Gassackzuschnitt nach einem der vorhergehenden Ansprüche, **dadurch gekennzeichnet, daß** die Flächenfaltlinien (12s, 14s, 16s; 112s, 114s, 116s) über alle Seitenabschnitte (12, 14, 16) betrachtet in einer Zickzacklinie verlaufen.

9. Gassackzuschnitt nach einem der vorhergehenden Ansprüche, **dadurch gekennzeichnet, daß** benachbarte Flächenfaltlinien (12s, 14s, 16s; 112s, 114s, 116s) jeweils im stumpfen Winkel zueinander verlaufen.

10. Gassackzuschnitt nach einem der vorhergehenden Ansprüche, **dadurch gekennzeichnet, daß** die Seitenabschnitte (12, 14, 16; 112, 114; 116) eine im wesentlichen hexagonale Form aufweisen.

11. Verfahren zur Herstellung eines Gassacks für ein Fahrzeuginsassen-Rückhaltesystem, mit den folgenden Schritten:
a) ein zweidimensional ausbreitbarer Gassackzuschnitt (10; 100) nach einem der vorhergehenden Ansprüche wird bereitgestellt,
b) der erste Seitenabschnitt (12; 112) wird an der ersten Faltlinie (18k; 118k) gefaltet und flach auf den zweiten Seitenabschnitt (14; 114) gelegt,
c) untere Teilabschnitte (12u, 14u; 112u, 114u) des ersten und zweiten Seitenabschnitts (12, 14; 112, 114) werden zumindest abschnittsweise miteinander verbunden,
d) ein oberer Teilabschnitt (12o, 112o) des ersten Seitenabschnitts (12; 112) wird entlang der Flächenfaltlinie (12s; 112s) des ersten Seitenabschnitts (12; 112) zurückgeschlagen,
e) der dritte Seitenabschnitt (16; 116) wird an der zweiten Kantenfaltlinie (20k; 120k) gefaltet und flach auf den zweiten Seitenabschnitt (14, 114) gelegt,
f) ein oberer Teilabschnitt (16o; 116o) des dritten Seitenabschnitts (16; 116) und ein oberer Teilabschnitt (14o; 114o) des zweiten Seitenabschnitts (14; 114) werden miteinander verbunden,
g) die Teilabschnitte werden so umgeschlagen, daß auf einer Seite der Flächenfaltlinie (12s, 14s, 16s; 112s, 114s, 116s) der obere Teilabschnitt (12o; 112o) des ersten Seitenabschnitts (12; 112) und der untere Teilabschnitt (16u; 116u) des Dritten Seitenabschnitts (16; 116) liegen und alle anderen Teilabschnitte (12u, 14u, 14o, 16o; 112u, 114u, 114o, 116o) auf der anderen Seite liegen und
h) der untere Teilabschnitt (16u; 116u) des dritten Seitenabschnitts (16; 116) wird mit dem oberen Teilabschnitt (12o; 112o) des ersten Seitenabschnitts (12; 112) verbunden.

12. Verfahren nach Anspruch 11, **dadurch gekennzeichnet, daß** für alle Verbindungen die jeweils zu verbindenden Abschnitte (12, 14, 16; 112; 114; 116) und Teilabschnitte (12u, 12o, 14u, 14o, 16u, 16o; 112u, 112o, 114u, 114o, 116u, 116o) vollständig flach ausgebreitet werden können.

13. Verfahren nach einem der Ansprüche 11 und 12, **dadurch gekennzeichnet, daß** in einem Teilbereich der Verbindung zwischen den unteren Teilabschnitten (12u, 14u) des ersten und zweiten Seitenabschnitts (12, 14) eine Aufnahmeöffnung (26) für einen Gasgenerator oder eine Einströmöffnung für Druckgas ausgebildet wird.

14. Verfahren nach einem der Ansprüche 11 und 12, **dadurch gekennzeichnet, daß** im unteren Teilabschnitt (114u) des zweiten Seitenabschnitts (114) eine Aufnahmeöffnung (26) für einen Gasgenerator oder eine Einströmöffnung für Druckgas ausgebildet wird.

15. Verfahren nach einem der Ansprüche 11 bis 13, **dadurch gekennzeichnet, daß** wenigstens eine Entlüftungsöffnung ausgebildet wird, und daß Teilausschnitte (28) der Entlüftungsöffnung jeweils an einem und/oder beiden Enden der Flächenfaltlinien (12s, 14s, 16s; 112s, 114s, 116s) vorgesehen werden.

16. Verfahren nach einem der Ansprüche 11 bis 15, **dadurch gekennzeichnet, daß** vor Schritt a) der Gassackzuschnitt (100) aus zwei einzelnen Materialstücken (100a, 100b) zusammengesetzt wird.

17. Verfahren nach Anspruch 16, **dadurch gekennzeichnet, daß** die zwei Materialstücke (100a, 100b) eine identische Außenkontur aufweisen.

18. Verfahren nach einem der Ansprüche 16 und 17, **dadurch gekennzeichnet, daß** die Form eines der Materialstücke (100a, 100b) der Form des dritten Seitenabschnitts (116) bzw. des ersten Seitenabschnitts (112) mit dem daran angesetzten unteren oder oberen Teilabschnitt (114u, 114o) des zweiten Seitenabschnitts (114) entspricht.

## Claims

1. A two-dimensional gas bag blank (10; 100) including first, second and third side sections (12, 14, 16; 112, 114; 116),
the first side section (12; 112) being connected to the second side section (14; 114) via a common side edge (18; 118) forming a first edge fold line (18k; 118k), and the second side section (14; 114) being connected to the third side section (16; 116) via a common side edge (20; 120) forming a second edge fold line (20k; 120k),
and a surface fold line (12s, 14s, 16s; 112s, 114s, 116s) extending on the surface of each section (12, 14, 16; 112, 114, 116),
**characterized in that** the surface fold lines (12s, 14s, 16s; 112s, 114s, 116s) form an acute angle with the respective adjacent edge fold lines (18k, 20k; 118k, 120k).

2. The gas bag blank according to claim 1, **characterized in that** the acute angle is between 55° and 75°.

3. The gas bag blank according to either of the preceding claims, **characterized in that** a bottom partial section (12u; 112u) of the first side section (12, 112) has a shape that is mirror-inverted in relation to that of a bottom partial section (14u; 114u) of the second side section (14; 114),
a top partial section (14o; 114o) of the second side section (14; 114) has a shape that is mirror-inverted in relation to that of a top partial section (16o; 116o) of the third side section (16; 116), and
a bottom partial section (16u; 116u) of the third side section (16; 116) has a shape that is mirror-inverted in relation to that of a top partial section (12o; 112o) of the first side section (12; 112).

4. The gas bag blank according to claim 3, **characterized in that** the bottom partial section (12u; 112u) of the first side section (12; 112) adjoins the bottom partial section (14u; 114u) of the second side section (14; 114) via the first edge fold line (18k; 118k).

5. The gas bag blank according to any of the preceding claims, **characterized in that** the first and second side sections (12, 14) are shaped substantially identically.

6. The gas bag blank according to any of the preceding claims, **characterized in that** the third side section (116) and the first side section (112) are shaped substantially identically.

7. The gas bag blank according to any of claims 3 to 6, **characterized in that** the top partial section (14o; 114o) of the second side section (14; 114) adjoins the top partial section (16o; 116o) of the third side section (16; 116) via the second edge fold line (20k; 120k).

8. The gas bag blank according to any of the preceding claims, **characterized in that** the surface fold lines (12s, 14s, 16s; 112s, 114s, 116s) extend in a zigzag line as viewed across all side sections (12, 14, 16).

9. The gas bag blank according to any of the preceding claims, **characterized in that** adjacent surface fold lines (12s, 14s, 16s; 112s, 114s, 116s) each extend at an obtuse angle with respect to one another.

10. The gas bag blank according to any of the preceding claims, **characterized in that** the side sections (12, 14, 16; 112, 114; 116) each have a substantially hexagonal shape.

11. A method of manufacturing a gas bag for a vehicle occupant restraint system, comprising the following steps:
a) providing a gas bag blank (10; 100) according to any of the preceding claims, which is adapted to be spread out in two dimensions,
b) folding the first side section (12; 112) at the first fold line (18k; 118k) and placing it flat on the second side section (14; 114),
c) connecting bottom partial sections (12u, 14u; 112u, 114u) of the first and second side sections (12, 14; 112, 114) to one another at least in sections,
d) folding back a top partial section (12o, 112o) of the first side section (12; 112) along the surface fold line (12s; 112s) of the first side section (12; 112),
e) folding the third side section (16; 116) at the second edge fold line (20k; 120k) and placing it flat on the second side section (14, 114),
f) connecting a top partial section (16o; 116o) of the third side section (16; 116) and a top partial section (14o; 114o) of the second side section (14; 114) to each other,
g) folding over the partial sections such that the top partial section (12o; 112o) of the first side section (12; 112) and the bottom partial section (16u; 116u) of the third side section (16; 116) are disposed on one side of the surface fold line (12s, 14s, 16s; 112s, 114s, 116s) and all the other partial sections (12u, 14u, 14o, 16o; 112u, 114u, 114o, 116o) are disposed on the other side, and
h) connecting the bottom partial section (16u; 116u) of the third side section (16; 116) to the top partial section (12o; 112o) of the first side section (12; 112).

12. The method according to claim 11, **characterized in that** for all connections the sections (12, 14, 16; 112; 114; 116) and partial sections (12u, 12o, 14u, 14o, 16u, 16o; 112u, 112o, 114u, 114o, 116u, 116o) to be respectively connected may be spread out completely flat.

13. The method according to either of claims 11 and 12, **characterized in that** a receiving opening (26) for a gas generator or an inflow opening for pressurized gas is formed in a partial region of the connection between the bottom partial sections (12u, 14u) of the first and second side sections (12, 14).

14. The method according to either of claims 11 and 12, **characterized in that** a receiving opening (26) for a gas generator or an inflow opening for pressurized gas is formed in the bottom partial section (114u) of the second side section (114).

15. The method according to any of claims 11 to 13, **characterized in that** at least one vent hole is formed, and **in that** partial cutouts (28) of the vent hole are each provided at one and/or both ends of the surface fold lines (12s, 14s, 16s; 112s, 114s, 116s).

16. The method according to any of claims 11 to 15, **characterized in that** prior to step a) the gas bag blank (100) is assembled from two individual pieces of material (100a, 100b).

17. The method according to claim 16, **characterized in that** the two pieces of material (100a, 100b) have an identical outer contour.

18. The method according to either of claims 16 and 17, **characterized in that** the shape of one of the pieces of material (100a, 100b) corresponds to the shape of the third side section (116) or of the first side section (112) with the bottom or top partial section (114u, 114o) of the second side section (114) attached thereto.

## Revendications

1. Découpe de coussin à gaz (10 ; 100) en deux dimensions, comportant un premier, un deuxième et un troisième tronçon latéral (12, 14, 16 ; 112, 114 ; 116),
le premier tronçon latéral (12 ; 112) étant relié au deuxième tronçon latéral (14 ; 114) par une arête latérale (18 ; 118) commune formant une première ligne de pliage d'arête (18k ; 118k), et le deuxième tronçon latéral (14 ; 114) étant relié au troisième tronçon latéral (16 ; 116) par une arête latérale (20 ; 120) commune formant une deuxième ligne de pliage d'arête (20k ; 120k),
et une ligne de pliage de surface (12s, 14s, 16s ; 112s, 114s, 116s) s'étendant sur la surface de chaque tronçon (12, 14, 16 ; 112, 114, 116),**caractérisé en ce que** les lignes de pliage de surface (12s, 14s, 16s ; 112s, 114s, 116s) forment un angle aigu avec les lignes de pliage d'arête (18k, 20k ; 118k, 120k) respectivement voisines.

2. Découpe de coussin à gaz selon la revendication 1, **caractérisé en ce que** l'angle aigu est entre 55° et 75°.

3. Découpe de coussin à gaz selon l'une des revendications précédentes,, **caractérisé en ce qu'**un tronçon partiel inférieur (12u ; 112u) du premier tronçon latéral (12, 112) présente une forme à symétrie spéculaire par rapport à un tronçon partiel inférieur (14u ; 114u) du deuxième tronçon latéral (14 ; 114),
un tronçon partiel supérieur (14o ; 114o) du deuxième tronçon latéral (14 ; 114) présente une forme à symétrie spéculaire par rapport à un tronçon partiel supérieur (16o ; 116o) du troisième tronçon latéral (16 ; 116) et
un tronçon partiel inférieur (16u ; 114u) présente une forme à symétrie spéculaire par rapport à un tronçon partiel supérieur 12o ; 112o) du premier tronçon latéral (12 ; 112).

4. Découpe de coussin à gaz selon la revendication 3, **caractérisé en ce que** le tronçon partiel inférieur (12u ; 112u) du premier tronçon latéral (12 ; 112) se raccorde via la première ligne de pliage d'arête (18k ; 118k) au tronçon partiel inférieur (14u ; 114u) du deuxième tronçon latéral (14 ; 114).

5. Découpe de coussin à gaz selon l'une des revendications précédentes, **caractérisé en ce que** les premier et deuxième tronçons latéraux (12, 14) ont une forme sensiblement identique.

6. Découpe de coussin à gaz selon l'une des revendications précédentes, **caractérisé en ce que** le troisième tronçon latéral (116) et le premier tronçon latéral (112) sont de forme sensiblement identique.

7. Découpe de coussin à gaz selon l'une des revendications 3 à 6, **caractérisé en ce que** le tronçon partiel supérieur (14o ; 114o) du deuxième tronçon latéral (14 ; 114) se raccorde via la deuxième ligne de pliage (20k ; 120k) au tronçon partiel supérieur (16o ; 116o) du troisième tronçon latéral (16 ; 116).

8. Découpe de coussin à gaz selon l'une des revendications précédentes, **caractérisé en ce que** vues sur tous les tronçons latéraux (12, 14, 16), les lignes de pliage de surfaces (12s, 14s, 16s ; 112s, 114s, 116s) s'étendent en ligne en zigzag.

9. Découpe de coussin à gaz selon l'une des revendications précédentes, **caractérisé en ce que** les lignes de pliage de surfaces (12s, 14s, 16s ; 112s, 114s, 116s) voisines s'étendent chacune sous un angle obtus les unes par rapport aux autres.

10. Découpe de coussin à gaz selon l'une des revendications précédentes, **caractérisé en ce que** les tronçons latéraux (12, 14, 16 ; 112, 114 ; 116) présentent une forme sensiblement hexagonale.

11. Procédé de fabrication d'un coussin à gaz pour un système de retenue de passager de véhicule, comportant les étapes suivantes :
a) fourniture d'une découpe de coussin à gaz (10 ; 100) susceptible d'être déployé en deux dimensions, selon l'une des revendications précédentes,
b) un premier tronçon latéral (12 ; 112) est plié sur la première ligne de pliage (18k ; 118k) et posé à plat sur le deuxième tronçon latéral (14 ; 114),
c) des tronçons partiels inférieurs (12u, 14u ; 112u, 114u) des premier et deuxième tronçons latéraux (12, 14 ; 112, 114) sont reliés les uns aux autres au moins par tronçons,
d) un tronçon partiel supérieur (12o, 112o) du premier tronçon latéral (12 ; 112) est replié le long de la ligne de pliage de surface (12s ; 112s) du premier tronçon latéral (12 ; 112),
e) un troisième tronçon latéral (16 ; 116) est plié sur la deuxième ligne de pliage d'arête (20k ; 120k) et posé à plat sur le deuxième tronçon latéral (14 ; 114),
f) un tronçon partiel supérieur (16o ; 116o) du troisième tronçon latéral (16 ; 116) et un tronçon partiel supérieur (14o ; 114o) du deuxième tronçon latéral (14 ; 114) sont reliés l'un à l'autre,
g) les tronçons partiels sont rabattus de telle sorte que sur un côté de la ligne de pliage de surface (12s, 14s, 16,s ; 112s, 114s, 116s), se trouvent le tronçon partiel supérieur (12o ; 112o) du premier tronçon latéral (12 ; 112) et le tronçon partiel inférieur (16u ; 116u) du troisième tronçon latéral (16 ; 116) et que tous les autres tronçons partiels (12u, 14u, 14o. 16o ; 112u, 114o, 116o) se trouvent sur l'autre côté.
h) le tronçon partiel inférieur (16u ; 116u) du troisième tronçon latéral (16 ; 116) est relié au tronçon partiel supérieur (12o ; 112o) du premier tronçon latéral (12 ; 112).

12. Procédé selon la revendication 11, **caractérisé en ce que** pour toutes les liaisons, les tronçons (12, 14, 16 ; 112; 114, 116), les tronçons partiels (12u, 12o, 14u, 14o, 16u, 16o; 112u, 112o, 114u, 114o, 116u, 116o) peuvent être déployés complètement à plat.

13. Procédé selon l'une des revendications 11 et 12, **caractérisé en ce que** dans une région partielle de la liaison entre les tronçons partiels inférieurs (12u, 14u) des premier et deuxième tronçons partiels (12, 14), une ouverture de réception (26) est réalisée pour un générateur de gaz ou un orifice d'écoulement est réalisé pour le gaz sous pression.

14. Procédé selon l'une des revendications 11 et 12, **caractérisé en ce que** dans le tronçon partiel inférieur (114u) du deuxième tronçon latéral (114), une ouverture de réception (26) est réalisée pour un générateur de gaz ou un orifice d'écoulement est réalisé pour le gaz sous pression.

15. Procédé selon l'une des revendications 11 à 13, **caractérisé en ce qu'**il est réalisé au moins un orifice d'aération, et **en ce que** des secteurs partiels (28) de l'orifice d'aération sont prévus respectivement à une extrémité et/ou aux deux extrémités des lignes de pliage de surface (12s, 14s, 16s ; 112s, 114s, 116).

16. Procédé selon l'une des revendications 11 à 15, **caractérisé en ce que** la découpe de coussin à gaz (100) en deux pièces de matériau individuelles (100a, 100b) sont assemblées avant l'étape a).

17. Procédé selon la revendication 16, **caractérisé en ce que** les deux pièces de matériau (100a, 100b) présentent un contour extérieur identique.

18. Procédé selon l'une des revendications 16 et 1, **caractérisé en ce que** la forme d'une des pièces de matériau (100a, 100b) correspond à la forme du troisième tronçon latéral (116) ou du premier tronçon latéral (112) avec le tronçon partiel inférieur ou supérieur (114u, 114o) du deuxième tronçon latéral (114), qui y est rapporté, respectivement.
